# EUROPÄISCHE PATENTANMELDUNG

(11) **EP 1 681 181 A2**
(43) Veröffentlichungstag der Anmeldung: **19.07.2006**
(21) Anmeldenummer: 06000367.0
(22) Anmeldetag: 10.01.2006
(51) Int. Cl.: B60G 17/02, B60G 15/06, F16F 15/02

(54) **Federträger mit einem höhenverstellbaren Federteller**

(30) Priorität: 14.01.2005 DE 102005001745
(71) Anmelder: ZF FRIEDRICHSHAFEN AG, 88046 Friedrichshafen (DE)
(72) Erfinder: Münster, Martin, 88046 Friedrichshafen (DE); Mair, Ulrich, 88045 Friedrichshafen (DE); Baasch, Detlef, 88048 Friedrichshafen (DE)

(57) **Zusammenfassung**

Federträger, umfassend eine erste Baugruppe und eine dazu axial relativ bewegliche zweite Baugruppe, wobei zwischen den beiden Baugruppen mindestens eine Tragfeder zwischen Federtellern angeordnet ist, wobei mindestens einer der Federteller in seiner axialen Position mittels eines in einem Gehäuse angeordneten Aktuators, der einen Rotor umfasst, in Verbindung mit einer Gewindespindel und einer Gewindemutter einstellbar ist, wobei der Rotor die Gewindespindel antreibt, wobei sich die Gewindespindel am Gehäuse des Aktuators abstützt.

## Beschreibung

Die Erfindung betrifft einen Federträger gemäß dem Oberbegriff von Patentanspruch-1.

Die DE 101 01 694 C1 beschreibt einen Federträger, dessen oberer Federteller mittels eines elektromotorischen Aktuators in seiner axialen Position einstellbar ist. In einem Gehäuse ist ein Stator befestigt, von dem ein innenliegender Rotor angetrieben wird. Der Rotor stützt sich über gehäuseseitige Lager ab. Die Innenseite des Rotors ist als eine Gewindemutter ausgeführt, die außenseitig auf eine Gewindespindel einwirkt.
Aus Gründen der Reduzierung der Massenträgheit des Rotors wird dieser axial möglichst kurz ausgeführt. Auch die axiale Traglänge der Gewindemutter ist vergleichsweise kurz, so dass die Führungsgenauigkeit der Gewindespindel nicht optimal ist.

In der gattungsbildenden DE 102 55 764 B3 kommt ebenfalls als Aktuator ein E-Motor in der Bauweise eines Innenläufers zur Anwendung, wobei der Rotor über einen nach innen ausgerichteten radialen Ansatz eine Gewindespindel antreibt, die wiederum über eine auf der Außenseite der Gewindespindel axial bewegliche Gewindemutter den Federteller axial verstellt. Die Gewindespindel ist radial direkt auf einer Kolbenstange eines Schwingungsdämpfers gelagert. Maßliche Toleranzen, z. B. ein Schiefstand der Kolbenstange zur Rotor, führen zu einer Verspannung innerhalb der Federtellerhöhenverstellung.

Aufgabe der vorliegenden Erfindung ist es die Führung der beweglichen Bauteile innerhalb der Federtellerhöhenverstellung zu verbessern.

Erfindungsgemäß wird die Aufgabe dadurch gelöst, dass der Rotor die Gewindespindel antreibt, wobei sich die Gewindespindel am Gehäuse des Aktuators abstützt.

Der große Vorteil der Erfindung besteht darin, dass völlig unabhängig von der Lage der Gewindemutter und damit des verstellbaren Federtellers eine gleichbleibende Führungsqualität des Federtellers vorliegt. Es lassen sich weit auseinanderliegende Lagerstellen für die Gewindespindel konstruieren, so dass die Rundlaufgenauigkeit des Rotors besonders gut ist.

Dabei steht die Gewindespindel an ihrem Innendurchmesser mit der Gewindemutter in Eingriff. Praktisch kann man an beliebiger Stelle des Außendurchmessers die zur Führung der Gewindespindel notwendigen Lager platzieren.

In weiterer vorteilhafter Ausgestaltung erstreckt sich der verstellbare Federteller nach radial innen. Bei einem Aktuator mit einem Rotor als Innenläufer kann der vollständige Innenraum der Gewindespindel als Bauraum für die Feder verwendet werden.

Es ist zusätzlich möglich, dass der verstellbare Federteller eine erste Feder zu der ersten Baugruppe und eine zweite Feder zu der zweiten Baugruppe abstützt. Mit dieser Federanordnung übernimmt eine Feder eine statische Grundlast, so dass der Aktuator nur noch für die dynamischen Traganteile der Federanordnung eingesetzt werden muss.

Gemäß einer vorteilhaften Ausführung sind beide Federn radial innerhalb der Gewindespindel angeordnet.

Bei einer Alternativvariante ist die Baugruppe Gewindemutter-verstellbarer Federteller über ein Winkelprofilstück mit einem Zwischenfederteller verbunden, wobei sich mindestens eine Feder zwischen der einen Baugruppe und dem Zwischenfederteller und eine zweite Feder zwischen dem verstellbaren Federteller und der zweiten Baugruppe angeordnet ist. Dieses Konstruktionsprinzip erlaubt die Verwendung besonders großer Windungsdurchmesser bei einer der Federn. Damit lässt sich eine axiale Überschneidung der beiden Federn realisieren und erleichtert die konstruktive Auslegung des Federsatzes auf eine gewünschte Federkennlinie.

Es besteht die Möglichkeit, dass die Feder auf dem Zwischenfederteller radial außerhalb des Aktuators angeordnet ist. Aufgrund dieser Anordnung der Feder lässt sich ein besonders großer Windungsdurchmesser einsetzen.

Des weiteren kann vorgesehen sein, dass der Rotor radial außerhalb des Stators angeordnet ist. Trotz der Außenläuferbauweise des Rotors kann dieser besonders einfach und auch kurz ausgeführt sein, da die Lagerung des Rotors über die vergleichsweise lange Gewindehülse vorgenommen wird.

Anhand der folgenden Figurenbeschreibung soll die Erfindung näher erläutert werden.

### Es zeigt:

- Fig. 1: Federträger mit innenliegendem Tragfedersatz
- Fig. 2: Federträger mit innen- und außenliegender Tragfeder
- Fig. 3: Federträger mit einem Aktuator in Außenläuferbauweise

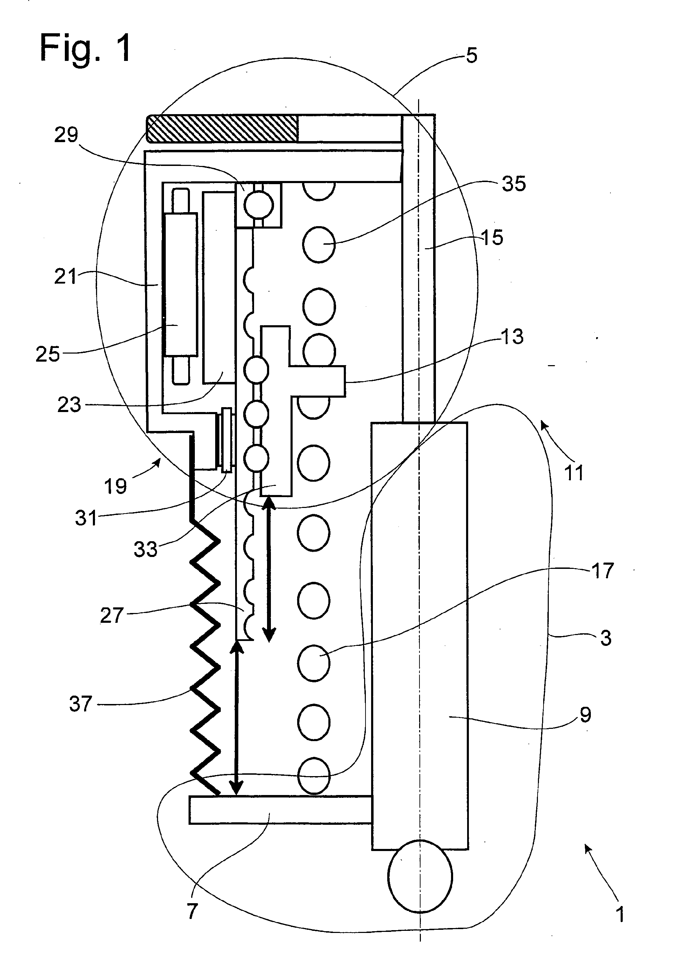

Die Fig. 1 zeigt ein Prinzipschaubild eines Federträgers 1, der zwei axial relativ zu einander bewegliche Baugruppen 3; 5 aufweist. Eine erste Baugruppe 3 umfasst einen Federteller 7, der z. B. an einem Zylinder 9 eines Schwingungsdämpfers 11 befestigt ist. Die zweite Baugruppe 5 verfügt über einen Federteller 13, der mit einer Kolbenstange 15 des Schwingungsdämpfers 11 in Wirkverbindung steht. Zwischen den beiden Federtellern 7; 13 ist eine Tragfeder 17 verspannt. Grundsätzlich kann man den Federteller 7 z. B. auch direkt an einer Fahrzeugachse anordnen und den oberen Federteller 13 auch ohne Kolbenstange 15 mit einem Fahrzeugaufbau in Wirkverbindung bringen, so dass die Verwendung eines koaxial angeordneten Schwingungsdämpfers für die Erfindung nicht zwingend notwendig ist.

Die zweite Baugruppe 5 umfasst einen Aktuator 19 in einem Gehäuse 21. Der Aktuator ist bevorzugt als ein E-Motor ausgeführt und verfügt über einen Rotor 23 und einen Stator 25. Bezogen auf den Stator 25 stellt der Rotor 23 einen Innenläufer dar. Nach radial innen treibt der Rotor eine Gewindespindel 27 an, die sich über ein erstes Lager 29 und ein zweites Lager 31 am Gehäuse 21 des Aktuators 19 abstützt. Die Gewindespindel verfügt am Innendurchmesser über ein Bewegungsgewinde und steht mit einer Gewindemutter 33 in Eingriff. Der Federteller 13 ist an der Gewindemutter 33 befestigt und erstreckt sich nach radial innen. Eine Drehbewegung des Rotors wird von der Gewindespindel 27 in Verbindung mit der Gewindemutter 33 in eine Axialbewegung des Federtellers 13 umgesetzt, so dass über den Aktuator die Vorspannung der Tragfeder 17 eingestellt werden kann.

Neben der Tragfeder 17, die zwischen dem verstellbaren Federteller 13 und dem Federteller 7 der ersten Baugruppe verspannt ist, stützt sich eine zweite Feder 35 zwischen der zweiten Baugruppe und dem axial verstellbaren Federteller 13 ab. Die zweite Feder sorgt für eine statische Entlastung des Aktuators. Bei einer Verstellbewegung des Aktuators wird die Gesamtfederrate der beiden Federn 17; 35 verändert und zur Lageregelung eines Fahrzeugs genutzt. In diesem Ausführungsbeispiel sind beide Federn innerhalb der Gewindehülse 27 angeordnet. Die Gewindehülse 27 selbst erhält durch den vergleichsweise großen Abstand der beiden Lager 29; 31 eine sehr gute Rundlaufgenauigkeit. Des weiteren wird auch der Rotor 23, der direkt mit der Spindel verbunden ist, sehr exakt zum Stator positioniert, so dass ein geringer Luftspalt zwischen Rotor und Stator mit dem Ergebnis eines günstigen Wirkungsgrades erreicht werden kann, da eine Taumelbewegung zwischen dem Rotor und dem Stator praktisch ausgeschlossen ist. Für die Gewindemutter 33 bedeutet die vorteilhafte Lagerung der Gewindespindel, dass unabhängig von der Hublage eine gleichbleibende Winkelstellung zur Längsachse des Federträgers vorliegt. Ein unvermeidbares Lagerspiel zwischen der Gewindemutter und der Gewindespindel ist in jede Hublage gleich. Wenn dann die Gewindespindel direkt gelagert wird, können sich keine weiteren Toleranzen auf die Winkelstellung der Gewindemutter auswirken.

Ein Schutzrohr 37, das an dem Gehäuse 21 und dem Federteller 7 befestigt ist, schützt gegen Verschmutzung.

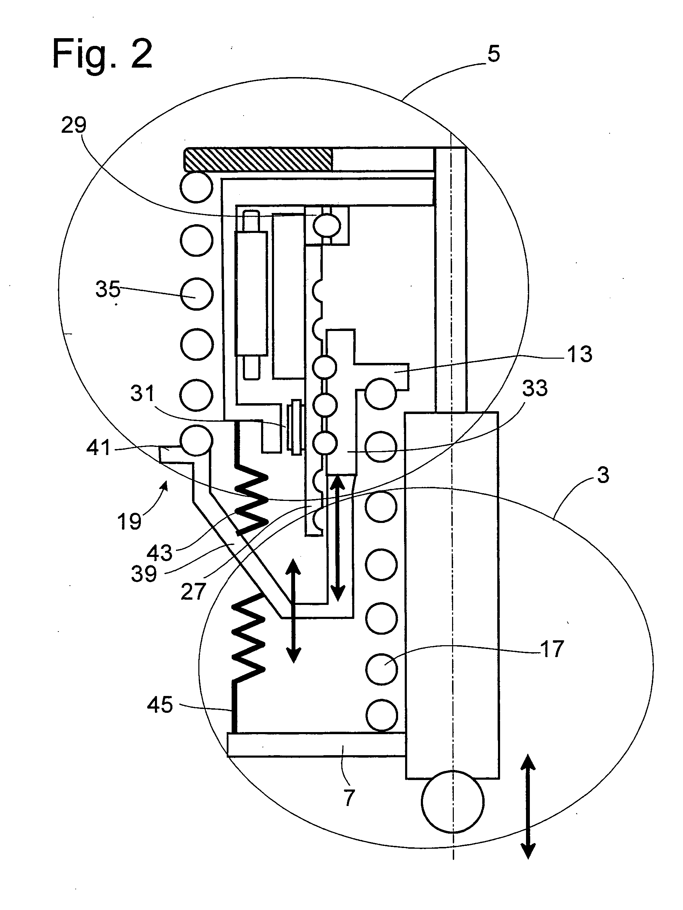

Die Fig. 2 zeigt einen Federträger mit einem bezüglich des Aktuators 19, der beiden Federteller 7; 13 und der Tragfeder 17 mit identischem Aufbau wie in Fig. 1. Abweichend ist die Baugruppe Gewindemutter 31- verstellbarer Federteller 17 über ein Winkelprofilstück 39 mit einem Zwischenfederteller 41 verbunden, wobei sich die zweite Feder 35 zwischen der zweiten Baugruppe 5 und dem Zwischenfederteller 41 erstreckt. Die erste Feder 17 ist zwischen dem Federteller 7 und dem axial verstellbaren Federteller 13 verspannt und befindet sich in einem Bauraum radial innerhalb der Gewindehülse 27. Ein weiterer wesentlicher Unterschied zur Fig. 1 besteht darin, dass die zweite Feder 35 auf dem Zwischenfederteller 41 radial außerhalb des Aktuators 19 angeordnet ist und deshalb einen sehr großen Windungsdurchmesser aufweisen kann. Ein erster Schutzbalg 43 ist einerseits am Gehäuse 21 und andererseits an der Baugruppe Zwischenfederteller 41-Winkelprofilstück 39 befestigt. Mit einem zweiten Schutzbalg 45 zwischen der Baugruppe Zwischenfederteller 41- Winkelprofilstück 39 und Federteller 7 wird der gesamte Federträger 1 abgedeckt. Beide Schutzbälge 43; 45 werden nur in Axialrichtung belastet und unterliegen keiner rotatorischen Bewegung.

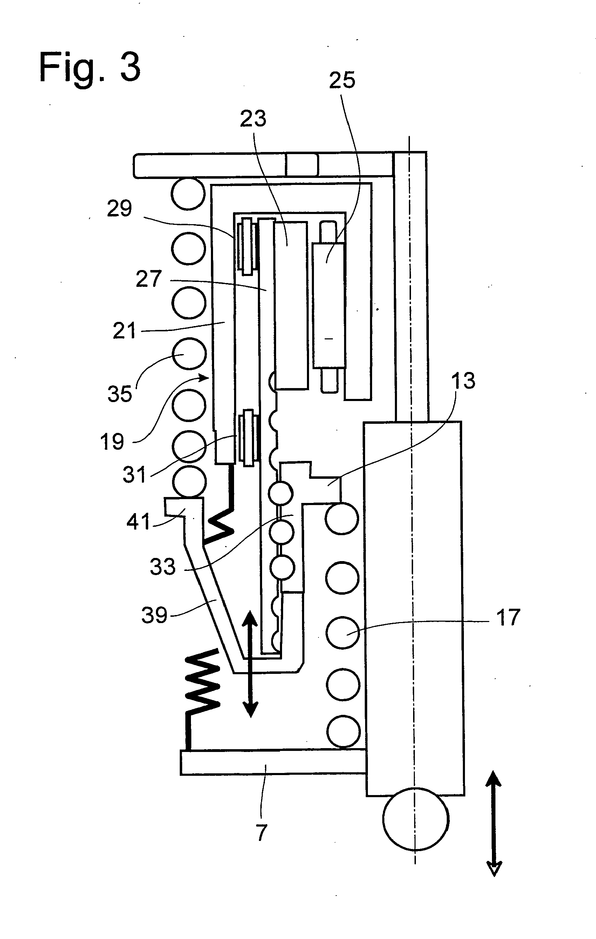

Mit der Fig. 3 soll verdeutlicht werden, dass das Bauprinzip mit der Verwendung eines Zwischenfedertellers 41 auch in Verbindung mit einem Aktuator 19 in der Bauweise eines Rotors 23 verwirklicht werden kann, der radial außerhalb des Stators 25 angeordnet ist.

## Patentansprüche

1. Federträger, umfassend eine erste Baugruppe und eine dazu axial relativ bewegliche zweite Baugruppe, mindestens eine zwischen den beiden Baugruppen über Federteller abgestützte Tragfeder und in einem Gehäuse angeordneten Aktuator, der einen Rotor, einen Stator sowie eine Gewindespindel und einer Gewindemutter umfasst, durch den einer der Federteller in seiner axialen Position zum anderen Federteller einstellbar ist, wobei der Rotor die Gewindespindel antreibt
**dadurch gekennzeichnet,**
**dass** sich die Gewindespindel (27) am Gehäuse (21) des Aktuators (19) abstützt.

2. Federträger nach Anspruch 1,
**dadurch gekennzeichnet,**
**dass** die Gewindespindel (23) an ihrem Innendurchmesser mit der Gewindemutter (33) in Eingriff steht.

3. Federträger nach Anspruch 1,
**dadurch gekennzeichnet,**
**dass** sich der verstellbare Federteller (13) nach radial innen erstreckt.

4. Federträger nach Anspruch 1,
**dadurch gekennzeichnet,**
**dass** der verstellbare Federteller (13) eine erste Feder (17) zu der ersten Baugruppe (3) und eine zweite Feder (35) zu der zweiten Baugruppe (5) abstützt.

5. Federträger nach Anspruch 4,
**dadurch gekennzeichnet,**
**dass** beide Federn (17; 35) radial innerhalb der Gewindespindel (23) angeordnet sind.

6. Federträger nach Anspruch 4,
**dadurch gekennzeichnet,**
**dass** die Baugruppe Gewindemutter-verstellbarer Federteller (13; 33) über ein Winkelprofilstück (39) mit einem Zwischenfederteller (41) verbunden ist, wobei mindestens eine Feder (35) zwischen der einen Baugruppe (5) und dem Zwischenfederteller (41) und eine zweite Feder (17) zwischen dem verstellbaren Federteller (13) und der anderen Baugruppe (3) angeordnet ist.

7. Federträger nach Anspruch 6,
**dadurch gekennzeichnet,**
**dass** die Feder (35) auf dem Zwischenfederteller (41) radial außerhalb des Aktuators (19) angeordnet ist.

8. Federträger nach Anspruch 1,
**dadurch gekennzeichnet,**
**dass** der Rotor (23) radial außerhalb des Stators (25) angeordnet ist.
